(19) Europäisches Patentamt

European Patent Office

Office européen des brevets

(11) Publication number: **0 478 864 A2**

## (12) EUROPEAN PATENT APPLICATION

(21) Application number: **90500113.7**

(22) Date of filing: **05.12.90**

(51) Int. Cl.5: **C04B 28/02**, C04B 28/06, C04B 40/06

(30) Priority: **04.10.90 ES 9002516**

(43) Date of publication of application:
**08.04.92 Bulletin 92/15**

(84) Designated Contracting States:
**AT BE CH DE DK FR GB GR IT LI LU NL SE**

(71) Applicant: **Madera Iglesias, José Ramon
San Fermin, 10
E-31002 Pamplona(ES)**

(72) Inventor: **Madera Iglesias, José Ramon
San Fermin, 10
E-31002 Pamplona(ES)**

(74) Representative: **De Arpe Fernandez, Manuel
ARPE Patentes y Marcas Guzmán El Bueno,
133
E-28003 Madrid(ES)**

(54) **Dry concrete in bulk and process for obtaining the same.**

(57) The process comprises a first phase in which the aggregates used are subjected to drying, the sand grains are then separated from the filler, and then the various components of the concrete (cement-sand-gravel-filler and, if necessary, other additives and/or additions), are proportioned, homogenized and tempered; the mixture is then subjected to a dry selective mixing process until a homogenous end product is obtained, characterised in that the degree of residual humidity, of the whole, is lower than 2% of its weight, preferably ranging from 0 to 0.6%, which is supplied as a dry product in bulk, neither mixed nor tempered with water until the time of its utilisation by the end consumer. The drying phase, in the case of some aggregates, may be replaced by a selective grinding. For use in building and engineering construction.

EP 0 478 864 A2

The present invention relates to a product for use in construction works: dry concrete in bulk, as well as to a process for obtaining the same.

The use of fresh concrete, that is to say, a mixture, in variable proportions, of cement-water-sand-gravel to which, depending on the case, certain additives and/or additions are incorporated or not, is known in the prior art of building and engineering construction, which is clearly the major, or rather the sole consumer, on an industrial scale, of concrete.

The concrete of the known art sets within a relatively short period of time (approximately two hours) as from the time the same has been produced and it should necessarily be subject to a continuous tempering throughout the said time interval. This is clearly due to the fact that once the said period of time has elapsed, the setting process terminates, wherefore the possibility of use no longer exists.

Currently there are two conventional systems for producing concrete: either in industrial plants set up for such purpose, in which the end product is produced and transported in a fresh state to the work yard where it will be used, or in situ utilising mechanical installations or, in many instances, simply by hand. Both systems present innumerable disadvantages. In the former case there are restrictions as to distribution due to the said time limit; there is the need to overdimension the industrial installations to satisfy the demand at specific temporary times; the production means thereof has to be inoperative or operative experiencing limitations when the demand drops; it is impossible to establish any production planning because, since the product is temporarily limited, it should be produced upon receipt of a strict order. Further, the said supply system imposes the impossibility of establishing favourable changes in the characteristics of the end product once it has been produced. Nonetheless this system is more advanced than that of in situ production, since it at least offers suitable processes for controlling the final quality, something which naturally does not exist in the in situ manufacturing system where strictly archaic techniques are used, and in which the control of the essential cement-sand-gravel-water ratio, upon which the constructive resistance and feasibility of the concrete depend, is carried out manually and it does not, for example, take into account the different degrees of moisture which the various constitutive elements of the mixture, normally stored in the open air and, therefore, exposed, to ambient conditions of rain and snow, could present from the start, which enable the said vital water-cement ratio to be altered.

Therefore it is an object of the invention to obtain a novel product: dry concrete in bulk, as well as a process for producing the same which obviates all the mentioned disadvantages.

It is a further object of this invention to provide a product in which the moisture content and granulometric curve have undergone an exhaustive control, permitting an end product having a guaranteed quality to be obtained.

Since the residual moisture of the product of this invention, on the whole, has been controlled and restricted within certain limits, it presents a lifespan, under optimum technical conditions, from its production to its use of more than 72 hours. This enables the product to be produced, manufactured and supplied in accordance with more profitable techniques from an economic-business point of view, apart from the fact, as has been seen, that the end product presents higher qualities from a strictly technical-constructive point of view.

The product made in accordance with the process of this invention will be supplied to the consumer as a dry product in bulk, that is to say, without having been mixed with water, which will only be added by the final consumer on the site where it is to be used, only then subjecting it to a final tempering with water, using for such purpose a plant for proportioning and tempering the dry concrete in bulk of the type described in another patent of the same inventor. This characteristic of the product enables, apart from its storage for long periods of time, once it has been produced, the initial characteristics of the composition to be modified and enriched by adding various elements, if so required by the construction technique, during the final tempering with water.

This invention discloses a four-phase process in which the aggregates used in the production of the concrete is firstly dried to reduce its degree of residual humidity, so that the sum of the respective degrees of moisture of the various components of the end product will, as a whole, be lower than 2% of its weight, ranging preferably from 0 to 0.6% of the weight.

In determined cases in which, due mainly to climatic and geographical conditions, aggregates having a degree of moisture lower than normal are used, the said drying phase may be replaced by a selective grinding by which, in said special cases, likewise satisfactory results are obtained with lower costs.

The sand grains will then be separated from the filler by means of, for example, pneumatic processes. This clearly enables the quantity of filler present in the final mixture to be subsequently controlled.

Finally, proportioning, tempering and homogenizing of the sand, the gravel, the filler along with the cement and other additives or components are carried out, if necessary, with the exact quantities and proportions in accordance with the technical characteristics or requirements of the end product to be obtained, the said mixture being subjected to a selective dry mixing operation until a homogenous end product is obtained.

The thusly obtained product will have, as a whole, a degree of residual humidity lower than 2% of its weight, and preferably between 0 and 0.6% of its weight. This permits, as mentioned, prior to its mixing and tempering with water, a duration of more than 72 hours as from its production in accordance with the previously disclosed process, within which period of time it may be used with all assurance insofar as the conservation of its original technical specifications.

Having described this invention in sufficient detail, there only remains to be said that any variations that do not alter the esential feature of the invention should be deemed as included within the scope defined in the following claims.

## Claims

1. Dry concrete in bulk comprised of cement-sand-gravel-filler to which enriching products have been added or not, characterised in that the degree of residual humidity of the whole will be lower than 2% of its weight, preferably ranging from 0 to 0.6% of its weight.

2. Process for obtaining dry concrete in bulk comprised of cement-water-gravel-filler to which enriching products have been added or not, characterised in that the aggregates will be dried, the sand grains will then be separated from the filler, to thereafter proceed with the proportioning, homogenizing, and tempering of the components of the concrete, the mixture then being subjected to a selective dry mixing operation until a homogeneous end product is obtained, which product is supplied as a dry product in bulk.

3. Process according to the preceding claim, characterised in that the drying phase may alternatively be replaced, in the case of some aggregates, by a selective grinding, obtaining satisfactory results.